# EUROPÄISCHE PATENTSCHRIFT

(11) **EP 4 122 723 B1**
(45) Veröffentlichungstag und Bekanntmachung des Hinweises auf die Patenterteilung: **03.04.2024**
(21) Anmeldenummer: 22181374.4
(22) Anmeldetag: 27.06.2022
(51) Int. Cl.: B60C 25/14, B60C 25/05

(54) **VORRICHTUNG UND VERFAHREN ZUR GEZIELTEN ABLAGE EINER REIFENANORDNUNG ZUR REIFENFÜLLUNG IN EINER REIFENFÜLLANLAGE**
DEVICE AND METHOD FOR SELECTIVELY DEPOSITING A TYRE ASSEMBLY FOR TYRE FILLING IN A TYRE INFLATION SYSTEM
DISPOSITIF ET PROCÉDÉ DE POSE CIBLÉE D'UN SYSTEME DE PNEU DESTINÉS AU GONFLAGE DE PNEU DANS UNE INSTALLATION DE GONFLAGE DE PNEUS

(30) Priorität: 19.07.2021 DE 102021118623
(43) Veröffentlichungstag der Anmeldung: 25.01.2023
(73) Patentinhaber: 3defacto GmbH, 64367 Mühltal (DE); Bohnenkamp AG, 49076 Osnabrück (DE)
(72) Erfinder: Rüth, Gregor, 21521 Wohltorf (DE); Dreßler, Janek, 61197 Florstadt (DE); Ahlmer, Peter, 64367 Mühltal (DE)
(74) Vertreter: Lenzing Gerber Stute

(56) Entgegenhaltungen:
- EP-A1- 2 108 532
- WO-A1-98/34802
- WO-A2-2009/155503
- US-A1- 2012 138 190

## Beschreibung

Die vorliegende Erfindung betrifft eine Reifenfüllanlage nach dem Oberbegriff des Anspruchs 1 sowie ein Verfahren nach Anspruch 5 zur gezielten Ablage einer Reifenanordnung zur Reifenfüllung in einer Reifenfüllanlage.

Es ist bekannt, schlauchlose Reifenanordnungen mittels Reifenfüllglocken mit Druckluft zu befüllen. Die Reifenanordnung besteht aus einer Radfelge und einem auf die Radfelge aufgebrachten Fahrzeugreifen. Die untere Seite der Reifenanordnung liegt dabei meistens auf einer Auflagefläche abgedichtet auf. Oberhalb der oberen Seite der Reifenanordnung ist eine Reifenfüllglocke angeordnet, die zum Reifenfüllvorgang abgesenkt wird und mit einem ringförmigen Rand die Reifenseitenwand von der Felge wegdrückt, so dass ein ringförmiger Raum zwischen Reifenseitenwand und Radfelge entsteht, über den die Druckluftfüllung des Reifens erfolgt. Die Druckluft strömt in die Füllglocke und von dort über den Ringraum ins Reifeninnere und bewegt schließlich die Reifenseitenwand unter Schließung des Ringraums in Anlage an die Felge. Wenn der notwendige Fülldruck erreicht wurde, wird die Reifenfüllglocke angehoben. Die Reifenseitenwand folgt dieser Bewegung bis der Reifen in die endgültige Position auf der Felge springt.

Herkömmlicherweise wird die montierte Reifenanordnung außerhalb der Füllglocke auf einem Förderband abgelegt und dann zum Befüllen unter die Füllglocke gefördert. Dabei ist unmittelbar unterhalb der Füllglocke ein zweites Förderband vorgesehen und die Reifenanordnung läuft von dem ersten Förderband, außerhalb der Füllglocke, auf das zweite Förderband, unterhalb der Füllglocke. Dieses Umsetzen hat den Nachteil, dass die auf dem ersten Förderband vorgenommen Zentrierung des Fahrzeugreifens relativ zur Felge nicht immer beibehalten werden kann, was gravierende Auswirkungen auf den Füllvorgang haben kann.

US 2012/0138190 A1 beschreibt eine Reifenfüllanlage mit einer Reifenfüllglocke. Ein verfahrbarer Wagen wird verwendet, um eine Reifenanordnung unter die Reifenfüllglocke zu verfahren. Der Wagen hat eine Auflagefläche für die Reifenanordnung, die in der Höhe verfahren wird, um für den Füllvorgang eine Abstützung nach unten herzustellen.

Aus der Schrift PCT/US98/02457 ist ebenfalls eine Reifenfüllanlage mit einer Reifenfüllglocke bekannt. Die Reifenanordnung wird für den Füllvorgang unter die Reifenfüllglocke gefahren. Dabei wird die Reifenanordnung von Armen gehalten.

WO 2009/155503 beschreibt eine Reifenfüllanlage mit verschieden großen Füllelementen, die je nach Durchmesser des Reifens ausgesucht werden.

Es ist Aufgabe der vorliegenden Erfindung eine Reifenfüllanlage anzugeben, bei der sichergestellt ist, dass beim Füllvorgang die Reifenanordnung in sich zentriert unterhalb der Füllglocke liegt.

Diese Aufgabe wird von einer Reifenfüllanlage mit den Merkmalen des Anspruchs 1 sowie von einem Verfahren zur gezielten Ablage einer Reifenanordnung zur Reifenfüllung in einer Reifenfüllanlage mit den Merkmalen des Anspruchs 5 gelöst.

Demnach ist eine Reifenfüllanlage mit einer Reifenfüllglocke, die wenigstens einen Reifenfüllring aufweist, der mittels einer Hubvorrichtung der Reifenfüllanlage vertikal bewegbar ist, vorgesehen. Die Reifenfüllanlage weist zudem eine Tragvorrichtung auf, die dazu ausgebildet ist, eine aus einer Radfelge und einem auf die Radfelge montierten Reifen bestehende Reifenanordnung zutragen, wobei die Tragvorrichtung eine Auflagefläche für die Reifenanordnung bildet und die untere Seite der Reifenanordnung mit der Auflagefläche in einem für den Füllvorgang benötigten abdichtenden Kontakt bringbar ist. Die Tragvorrichtung ist zwischen einer ersten Position, in der die Auflagefläche in Draufsicht außerhalb der Reifenfüllglocke liegt und einer zweiten Position, in der die Auflagefläche in Draufsicht innerhalb der Reifenfüllglocke liegt, unter Beibehaltung des Kontakts verfahrbar. Die zweite Position ist die Füllposition, d. h. die Reifenanordnung befindet sich in der Endposition für den Füllvorgang. Da der Kontakt unveränderlich bis zur Endposition beibehalten wird, gilt dies auch für die Zentrierung der Reifenanordnung, was sich positiv auf die Prozesssicherheit und den Füllvorgang auswirkt. Die Reifenfüllanlage weist einen Felgengreifer und einen Reifengreifer auf, die dazu ausgebildet sind, die Felge relativ zum Reifen zu zentrieren und/oder die zentrierte Reifenanordnung anzuheben und unter Beibehaltung der Zentrierung auf der Tragvorrichtung zur Ausbildung des abdichtenden Kontakts abzulegen. Der Felgengreifer greift die Felge bevorzugt von oben. Dies hat den Vorteil, dass die Tragvorrichtung eine durchgängige Auflagefläche haben kann und kein Raum für den Felgengreifer benötigt wird.

Unter dem Begriff "außerhalb" wird dabei verstanden, dass die Reifenanordnung nicht von der Füllglocke überdeckt ist und somit sowohl in vertikaler als auch in horizontaler Richtung vollständig außerhalb der Füllglocke liegt.

Der abdichtende Kontakt an der Unterseite des Reifens wird benötigt, da beim Füllvorgang die Druckluft von der Oberseite her in den Reifen einströmt und dabei die Felge im Inneren mit Druckluft beaufschlagt wird. In anderen Worten, die Felge wird nicht an einer Oberseite abgedichtet, sondern von Druckluft durchströmt. Die Auflagefläche ist bevorzugt eine durchgängige Fläche (ohne Unterbrechungen).

Vorzugsweise ist die Tragvorrichtung ein translatorisch bewegbarer Fahrtisch. Der Fahrtisch ist bevorzugt nur in einer horizontalen Ebene verfahrbar und weist eine plane Auflagefläche auf. Es ist aber auch denkbar, dass die Tragvorrichtung ein einziges durchgängiges (vollflächiges, ohne Schlitze) Förderband ist.

Die Anordnung wird besonders kompakt, wenn sich höchstens 10% der sich in Fahrtrichtung erstreckenden Gesamtlänge des Fahrtischs in der ersten Position in Draufsicht innerhalb der Reifenfüllglocke befindet. Dabei ist es vorteilhaft, wenn der Fahrtisch in der ersten Position eine in Draufsicht außerhalb der Reifenfüllglocke befindliche Fläche aufweist, die größer als eine Reifenanordnung ist, so dass diese vollständig außerhalb der Füllglocke auf dem Fahrtisch ablegbar ist.

Weiterhin ist ein Verfahren zur gezielten Ablage einer Reifenanordnung bestehend aus einer Radfelge und einem auf die Radfelge montierten Reifen zur Reifenfüllung in einer Reifenfüllanlage vorgesehen. Die Reifenfüllanlage hat eine Reifenfüllglocke aufweisend wenigstens einen Reifenfüllring und eine verfahrbare Tragvorrichtung sowie einen Reifengreifer und einen Felgengreifer. Das Verfahren umfasst die folgenden Schritte:
- Greifen der Felge mittels des Felgengreifer (bevorzugt von oben),
- Greifen des Reifens mittels des Reifengreifers,
- Zentrieren des Reifens relativ zur Felge,
- Anheben der zentrierten Reifenanordnung mittels des Felgengreifers und des Reifengreifers.
   a) Verfahren der Tragvorrichtung in eine erste Position, die sich in Draufsicht außerhalb der Reifenfüllglocke befindet,
   b) Ablegen der Reifenanordnung auf der Tragvorrichtung zur Ausbildung eines abdichtenden Kontakts zwischen der Unterseite der Reifenanordnung und einer Auflagefläche der Tragvorrichtung,
   c) Verfahren der Tragvorrichtung unter Beibehaltung des Kontakts in eine zweite Position, die sich in Draufsicht innerhalb der Reifenfüllglocke befindet,
   d) Verfahren eines Reifenfüllrings von einer Ausgangsposition in eine Füllposition in der der ausgewählte Reifenfüllring an einer Seitenfläche des Reifens anliegt und einen ringförmigen Raum zwischen Reifen und Radfelge zur Füllung des Reifens mit Druckluft ausbildet, und
   e) Einleiten von Druckluft in den ringförmigen Raum zwischen Reifen und Radfelge.

Es ergeben sich die oben genannten Vorteile.

Dabei kommt es generell nicht drauf an, in welcher Reihenfolge die Felge und der Reifen gegriffen werden. Vorzugsweise wird aber zuerst der Reifen zentriert gegriffen und danach die Felge von einer Felgenspanneinheit freigegeben und von dem Felgengreifer gegriffen. Die Zentrierung kann im angehobenen Zustand oder beim Bewegen der Reifenanordnung mittels der Greifer erfolgen.

Dabei ist es vorteilhaft, wenn das Verfahren in Schritt b) folgende Schritte aufweist:
- Ablegen der Felge mittels des Felgengreifers und Freigeben der Felge durch Öffnen des Felgengreifers,
- Wenn die Felge vollständig freigegeben ist, Ablegen des Reifen mittels des Reifengreifers und Freigeben des Reifens durch Öffnen des Reifengreifers.

Durch diese Abfolge kann verhindert werden, dass der Reifen sich beim Freigeben bzw. Ablegen der Felge relativ zu dieser bewegt und die Zentrierung verloren geht.

Die Felge und der Reifen befinden sich vor Schritt a) vorzugweise in einer Felgenspannvorrichtung, in der der Reifen auf der Felge montiert wird, wobei nach der Montage der Reifen und die Felge in der Felgenspannvorrichtung von dem Reifengreifer und dem Felgengreifer gegriffen werden.

Der Reifen ist vorzugsweise ein Fahrzeugreifen. Die Felgen haben bevorzugt einen Durchmesser zwischen 15 Zoll und 58 Zoll.

In einer besonders bevorzugten Ausführungsform sind mehrere Reifenfüllringe vorgesehen, die konzentrisch zueinander mit unterschiedlichen Durchmessern angeordnet sind, so dass je nach Größe der Reifenanordnung bzw. der Felge ein entsprechender Reifenfüllring für den Füllvorgang wählbar ist.

Eine bevorzugte Ausführungsform der Erfindung wird nachfolgend anhand der Zeichnungen näher erläutert. Die Figuren zeigen:
- Figur 1:: eine räumliche Darstellung eines Teils einer Reifenfüllanlage im gegriffenen Zustand der Felge und des Fahrzeugreifens, sowie
- Figur 2:: eine räumliche Darstellung des in Figur 1 dargestellten Teils der Reifenfüllanlage im gegriffenen Zustand des Fahrzeugreifens und im abgelegten Zustand der Felge.

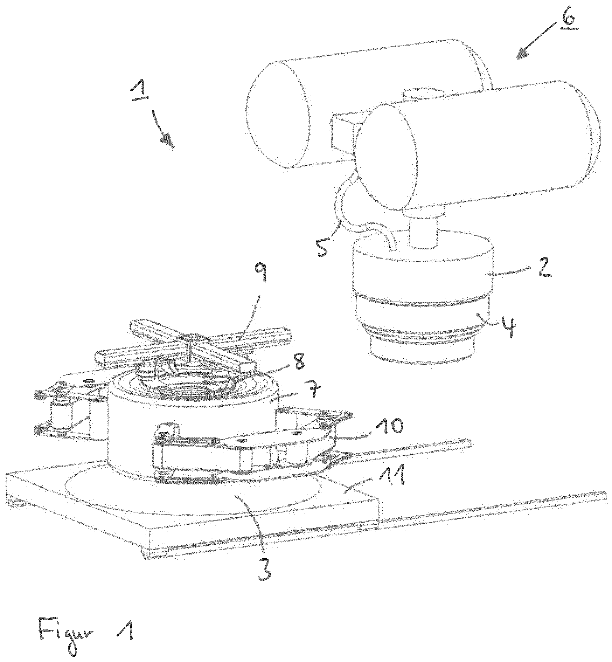

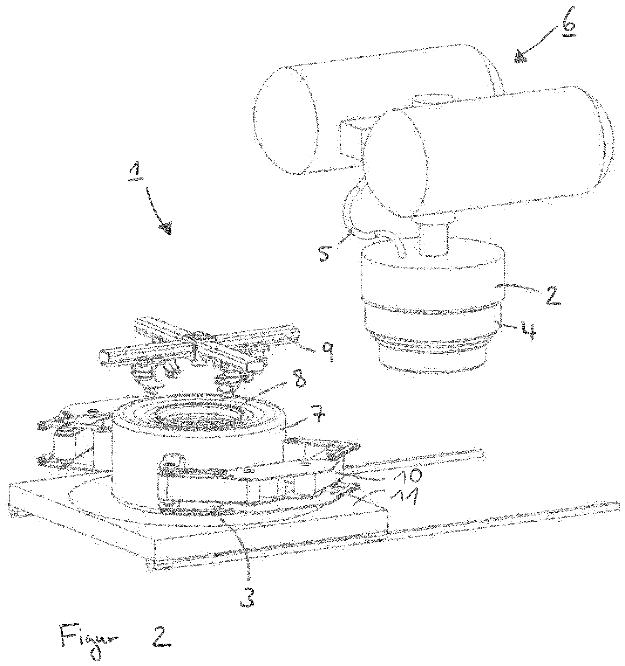

Die Figuren 1 und 2 zeigen einen Teil einer Reifenfüllanlage 1 mit Reifenfüllglocke 2. Die Reifenfüllglocke 2 ist beim Füllvorgang oberhalb einer Auflagefläche 3 angeordnet und weist vier zueinander konzentrisch angeordnete Reifenfüllringe 4 auf, die mittels einer nicht dargestellten Hubvorrichtung längs zu einer senkrecht auf der Auflagefläche stehenden Normalen zwischen einer Ausgangsposition und einer Füllposition bewegbar sind. Die Reifenfüllringe 4 sind bis auf ihre Größe identisch ausgebildet. Die Reifenfüllringe 4 sind in Radialrichtung zur Längsachse der Reifenfüllglocke gleichmäßig beabstandet angeordnet.

Die Reifenfüllglocke 2 begrenzt einen Glockenraum, der nach unten hin offen ist. Die Reifenfüllringe 4 und deren Position begrenzen bzw. definieren den Glockenraum. Die Reifenfüllglocke 2 ist oben über eine Anschlussleitung 5 und nicht dargestellten Ventilen mit einem Drucklufterzeugungsmittel 6, z. B. einem Druckluftbehälter verbunden, der den Glockenraum mit Druckluft versorgt.

Damit der Füllvorgang präzise und ohne Beschädigung der Reifenanordnung abläuft, muss die Reifenanordnung bestehend aus Fahrzeugreifen 7 und Felge 8 exakt und zentriert zueinander unter der Reifenfüllglocke 2 in einer Endposition auf der Auflagefläche 3 positioniert sein. Die Auflagefläche 3 bildet dabei eine (zusammenhängende) Dichtfläche für den Füllvorgang aus. Die Auflagefläche 3 ist durchgängig und weist keine Unterbrechungen auf. Zum Füllen des Reifens 7 der Reifenanordnung wird einer der Reifenfüllringe 4 der Füllglocke ausgesucht, der hinsichtlich seines Durchmessers zum Felgenaußendurchmesser der zu füllenden Reifenanordnung passt, so dass zwischen Reifenfüllringinnendurchmesser und Felgenaußendurchmesser ein Ringspalt vorhanden ist. Der ausgewählte Reifenfüllring 4 wird in eine nicht dargestellte Füllposition verfahren. Die Mittelachse der Reifenfüllringe entspricht der Mittelachse der Reifenanordnung in der Endposition.

In der Füllposition befindet sich der obere Rand der in der Endposition liegenden Felge innerhalb des Glockenraumes und die dem ausgewählten Reifenfüllring benachbarte Reifenwulst des Luftreifens ist durch den ausgewählten Reifenfüllring von der Felge abgehoben. Durch den zwischen der Felge und dem Reifenwulst vorhanden Ringspalt kann die über die Anschlussleitung dem Glockenraum zugeführte Druckluft in den von der Felge und dem Luftreifen begrenzten Ringraum gelangen. Beim Füllvorgang strömt die Druckluft auch durch die Mitte der Felge.

Um die Reifenanordnung für den Füllvorgang zu zentrieren, wird nach der Montage des Reifens auf der Felge die Felge 8 von einem Felgengreifer 9 und der Reifen 7 von einem Reifengreifer 10 gegriffen. Der Felgengreifer 9 und der Reifengreifer 10 sind bevorzugt Roboter-Greifer. Derartige Greifer sind typischerweise an Roboterarmen oder an Endbereichen von Linear- oder Rotationsantrieben befestigt. Die Greifer 9, 10 weisen Greiferbacken auf. Der Reifengreifer 10 greift den Reifen 7 an der äußeren Umfangsseite mittels vier Greiferbacken, die in Radialrichtung nach innen zugestellt werden. Die Felge 8 wird ebenfalls mittels vier Greiferbacken gegriffen, die die Felge am Felgenhorn radial von außen spannen. In einer Ausführungsform wird die Felge bei der Montage der Reifenanordnung in einer Felgenspanneinheit eingespannt. Der Reifen kann dann nach der Montage von Untergriffen relativ zur Felge leicht über das spätere Auflageniveau auf der Auflagefläche, vor dem Greifen des Reifens mit dem Reifengreifer, angehoben werden. Dadurch kann möglichen Spannungen und damit einhergehenden Relativbewegungen in der Reifenanordnung beim Ablegen auf die Auflagefläche vorgebeugt werden. Die Greifer 9, 10 bewegen sich beim Ablegen zwischen einem gegriffenen Zustand und einem geöffneten Zustand.

Wie in Figur 1 dargestellt, wird die vollständig gegriffene Reifenanordnung auf der Auflagefläche 3 abgelegt, die sich außerhalb der Füllglocke 2 befindet. Dabei lässt als erstes der Felgengreifer 9 die Felge 8 los (siehe Figur 2). Währenddessen greift der Reifengreifer 10 nach wie vor den Reifen 7. Dabei kann es sein, dass die Felge auf der Auflagefläche aufliegt. Dies muss aber nicht der Fall sein, denn beispielsweise wenn die Reifenflanke sehr steif und der Reifen breiter als die Felge ist, bleibt die Felge auf der oberen Reifenwulst hängen und legt sich nicht ab. Erst wenn der Felgengreifer die Felge 8 losgelassen hat, lässt der Reifengreifer 10 den Reifen 7 los, so dass sich dieser auf der Auflagefläche 3 ablegt. Durch diese Abfolge kann sichergestellt werden, dass der Reifen 7 zu der Felge 8 zentriert platziert wird, d. h. die Mittelachse der Felge entspricht der Mittelachse des Reifens. Es wird verhindert, dass beim Ablegen der Felge 8 der Reifen 7 undefiniert bewegt wird, da dieser noch gegriffen ist.

Wie in den Figuren dargestellt, ist die Auflagefläche 3 bevorzugt durch eine Oberseite eines Fahrtisches 11 definiert. Der Fahrtisch 11 kann aus dem Bereich unterhalb der Füllglocke 2 hinaus und wieder hineingefahren werden. Der Fahrtisch 11 wird dabei lediglich translatorisch verlagert. Ein Umsetzen der Reifenanordnung nach der Zentrierung ist nicht mehr notwendig. Da die Auflagefläche 3 und die mit der Ablage der Reifenordnung entstehende Dichtfläche bereits außerhalb der Füllglocke 2 definiert wird, kann verhindert werden, dass sich der Reifen 7 relativ zur Felge 8 beim Transport in die Endposition unterhalb der Füllglocke 2 bewegt. Dies trägt stark zur Prozesssicherheit des Füllvorgangs bei.

## Patentansprüche

1. Reifenfüllanlage (1) mit einer Reifenfüllglocke (2), die wenigstens einen Reifenfüllring (4) aufweist, der mittels einer Hubvorrichtung der Reifenfüllanlage vertikal bewegbar ist, und mit einer Tragvorrichtung (11), die dazu ausgebildet ist, eine aus einer Radfelge (8) und einem auf die Radfelge (8) montierten Reifen (7) bestehende Reifenanordnung zutragen, wobei die Tragvorrichtung (11) eine Auflagefläche (3) für die Reifenanordnung bildet und die untere Seite der Reifenanordnung mit der Auflagefläche (3) in einem für den Füllvorgang benötigten abdichtenden Kontakt bringbar ist, wobei die Tragvorrichtung (11) zwischen einer ersten Position, in der die Auflagefläche (3) in Draufsicht außerhalb der Reifenfüllglocke (2) liegt und einer zweiten Position, in der die Auflagefläche (3) in Draufsicht innerhalb der Reifenfüllglocke (2) liegt, unter Beibehaltung des Kontakts verfahrbar ist, **dadurch gekennzeichnet, dass** die Reifenfüllanlage (1) einen Felgengreifer (9) und einen Reifengreifer (11) aufweist, die dazu ausgebildet sind, die Felge (8) relativ zum Reifen (7) zu zentrieren und/oder die zentrierte Reifenanordnung anzuheben und unter Beibehaltung der Zentrierung auf der Tragvorrichtung (11) zur Ausbildung des abdichtenden Kontakts abzulegen.

2. Reifenfüllanlage nach Anspruch 1, **dadurch gekennzeichnet, dass** sich höchstens 10% der sich in Fahrtrichtung erstreckenden Gesamtlänge der Tragvorrichtung (11) in der ersten Position in Draufsicht innerhalb der Reifenfüllglocke (2) befindet.

3. Reifenfüllanlage nach Anspruch 2, **dadurch gekennzeichnet, dass** die Tragvorrichtung (11) ein translatorisch bewegbarer Fahrtisch ist.

4. Reifenfüllanlage nach Anspruch 2 oder 3, **dadurch gekennzeichnet, dass** der Fahrtisch (11) in der ersten Position eine in Draufsicht außerhalb der Reifenfüllglocke (2) befindliche Fläche aufweist, die größer als eine Reifenanordnung ist.

5. Verfahren zur gezielten Ablage einer Reifenanordnung bestehend aus einer Radfelge (8) und einem auf die Radfelge (8) montierten Reifen (7) zur Reifenfüllung in einer Reifenfüllanlage (1), wobei die Reifenfüllanlage (1) einen Reifengreifer (10) und einen Felgengreifer (9) umfasst, aufweisend
- eine Reifenfüllglocke (2) aufweisend wenigstens einen Reifenfüllring (4) und
eine verfahrbare Tragvorrichtung (11), wobei das Verfahren die folgenden Schritte umfasst:
- Greifen der Felge (8) mittels des Felgengreifer (9),
- Greifen des Reifens (7) mittels des Reifengreifers (10),
- Zentrieren des Reifens (7) relativ zur Felge (8),
- Anheben der zentrierten Reifenanordnung mittels des Felgengreifers (9) und des Reifengreifers (10),
a) Verfahren der Tragvorrichtung (11) in eine erste Position, die sich in Draufsicht außerhalb der Reifenfüllglocke (2) befindet,
b) Ablegen der Reifenanordnung auf der Tragvorrichtung (11) zur Ausbildung eines abdichtenden Kontakts zwischen der Unterseite der Reifenanordnung und einer Auflagefläche (3) der Tragvorrichtung,
c) Verfahren der Tragvorrichtung (11) unter Beibehaltung des Kontakts in eine zweite Position, die sich in Draufsicht innerhalb der Reifenfüllglocke (2) befindet,
d) Verfahren eines Reifenfüllrings (4) von einer Ausgangsposition in eine Füllposition in der der ausgewählte Reifenfüllring (4) an einer Seitenfläche des Reifens (7) anliegt und einen ringförmigen Raum zwischen Reifen (7) und Radfelge (8) zur Füllung des Reifens (7) mit Druckluft ausbildet, und
e) Einleiten von Druckluft in den ringförmigen Raum zwischen Reifen (7) und Radfelge (8).

6. Verfahren nach Anspruch 5, **dadurch gekennzeichnet, dass** das Verfahren in Schritt b) folgende Schritte aufweist:
• Ablegen der Felge (8) mittels des Felgengreifers (9) und Freigeben der Felge (8) durch Öffnen des Felgengreifers (9),
• Wenn die Felge (8) vollständig freigegeben ist, Ablegen des Reifen (7) mittels des Reifengreifers (10) und Freigeben des Reifens (7) durch Öffnen des Reifengreifers (10).

7. Verfahren nach Anspruch 5 oder 6, **dadurch gekennzeichnet, dass** die Felge (8) und der Reifen (10) vor Schritt a) sich in einer Felgenspannvorrichtung befinden, in der der Reifen (10) auf der Felge (8) montiert wird, wobei der Reifen (10) und die Felge (8) nach der Montage in der Felgenspannvorrichtung von dem Reifengreifer (10) und dem Felgengreifer (9) gegriffen werden.

## Claims

1. Tire inflation system (1) having a tire inflation bell (2) which has at least one tire inflation ring (4) which can be moved vertically by means of a lifting device of the tire inflation system, and having a support device (11) which is designed to carry a tire arrangement consisting of a wheel rim (8) and a tire (7) mounted on the wheel rim (8), wherein the support device (11) forms a support surface (3) for the tire arrangement and the lower side of the tire arrangement can be brought into sealing contact with the support surface (3) as required for the inflation process, wherein the support device (11) can be moved between a first position in which the support surface (3) lies outside the tire inflation bell (2) in top view and a second position in which the support surface (3) lies inside the tire inflation bell (2) in top view while maintaining the contact, **characterized in that** the tire inflation system (1) has a rim gripper (9) and a tire gripper (10) which are designed to center the rim (8) relative to the tire (7) and/or to lift the centered tire arrangement and to place it on the support device (11) while maintaining the centering in order to form the sealing contact.

2. Tire inflation system according to claim 1, **characterized in that** at most 10% of the total length of the support device (11) extending in the direction of travel is located in the first position in top view inside the tire inflation bell (2).

3. Tire inflation system according to claim 2, **characterized in that** the support device (11) is a translationally movable moving table.

4. Tire inflation system according to claim 2 or 3, **characterized in that** the moving table (11) in the first position has a surface which is located outside the tire inflation bell (2) in top view and which is larger than a tire arrangement.

5. Method of targeted placement of a tire arrangement consisting of a wheel rim (8) and a tire (7) mounted on the wheel rim (8) for tire inflation in a tire inflation system (1), the tire inflation system (1) comprising a tire gripper (10) and a rim gripper (9), having
- a tire inflation bell (2) having at least one tire inflation ring (4) and
a movable support device (11), the method comprising the following steps:
- Gripping the rim (8) by means of the rim gripper (9),
- Gripping the tire (7) by means of the tire gripper (10),
- Centering the tire (7) relative to the rim (8),
- Lifting the centered tire arrangement by means of the rim gripper (9) and the tire gripper (10),
a) Moving the support device (11) into a first position, which is located outside the tire inflation bell (2) in top view,
b) Placing the tire arrangement on the support device (11) to form a sealing contact between the underside of the tire arrangement and a support surface (3) of the support device,
c) Moving the support device (11) while maintaining the contact into a second position, which is located inside the tire inflation bell (2) in top view,
d) Moving a tire inflation ring (4) from an initial position to an inflation position in which the selected tire inflation ring (4) rests against a side surface of the tire (7) and forms an annular space between the tire (7) and the wheel rim (8) for inflating the tire (7) with compressed air, and
e) Introducing compressed air into the annular space between the tire (7) and the wheel rim (8).

6. Method according to claim 5, **characterized in that** the method in step b) comprises the following steps:
• Placing the rim (8) by means of the rim gripper (9) and releasing the rim (8) by opening the rim gripper (9),
• When the rim (8) is completely released, placing the tire (7) by means of the tire gripper (10) and releasing the tire (7) by opening the tire gripper (10).

7. Method according to claim 5 or 6, **characterized in that** the rim (8) and the tire (7) are located in a rim clamping device before step a), in which the tire (7) is mounted on the rim (8), the tire (7) and the rim (8) being gripped by the tire gripper (10) and the rim gripper (9) after mounting in the rim clamping device.

## Revendications

1. Installation (1) de gonflage de pneumatiques, comprenant une cloche (2) de gonflage des pneumatiques qui est munie d'au moins une bague (4) de gonflage desdits pneumatiques, pouvant être mue verticalement au moyen d'un dispositif de levage de l'installation de gonflage, et un dispositif de support (11) conçu pour porter un assemblage composé d'une jante (8) de roue et d'un pneumatique (7) monté sur ladite jante (8), sachant que le dispositif de support (11) forme une surface d'appui (3) dédiée à l'assemblage de pneumatique et que ladite surface d'appui (3) peut instaurer, avec la face inférieure dudit assemblage de pneumatique, un contact à effet d'étanchement nécessité par le processus de gonflage, lequel dispositif de support (11) peut être déplacé, avec maintien dudit contact, entre un premier emplacement auquel la surface d'appui (3) est située, observée en vue de dessus, à l'extérieur de la cloche (2) de gonflage des pneumatiques et un second emplacement auquel ladite surface d'appui (3), observée en vue de dessus, est située à l'intérieur de ladite cloche de gonflage (2), **caractérisée par le fait que** ladite installation (1) de gonflage de pneumatiques est dotée d'un élément (9) de préhension de jantes et d'un élément (10) de préhension de pneumatiques, conçus pour centrer la jante (8) par rapport au pneumatique (7) et/ou pour soulever l'assemblage de pneumatique centré, et pour le déposer sur le dispositif de support (11), avec maintien du centrage, en vue d'instaurer le contact à effet d'étanchement.

2. Installation de gonflage de pneumatiques, selon la revendication 1, **caractérisée par le fait que** la longueur totale du dispositif de support (11) s'étendant dans la direction du déplacement est située au premier emplacement, observée en vue de dessus, à l'intérieur de la cloche (2) de gonflage des pneumatiques à raison de 10 % au maximum.

3. Installation de gonflage de pneumatiques, selon la revendication 2, **caractérisée par le fait que** le dispositif de support (11) est un plateau de déplacement pouvant être animé de mouvements translatoires.

4. Installation de gonflage de pneumatiques, selon la revendication 2 ou 3, **caractérisée par le fait que** le plateau de déplacement (11) présente, au premier emplacement, une surface qui est située à l'extérieur de la cloche (2) de gonflage des pneumatiques, observée en vue de dessus, et est d'une taille supérieure à celle d'un assemblage de pneumatique.

5. Procédé conçu pour déposer, de manière ciblée, un assemblage de pneumatique composé d'une jante (8) de roue et d'un pneumatique (7) monté sur ladite jante (8), dans une installation (1) de gonflage de pneumatiques, en vue du gonflage dudit pneumatique, laquelle installation de gonflage (1) est dotée d'un élément (10) de préhension de pneumatiques et d'un élément (9) de préhension de jantes,
comportant
- une cloche (2) de gonflage des pneumatiques, munie d'au moins une bague (4) de gonflage desdits pneumatiques et
- un dispositif de support (11) déplaçable, ledit procédé incluant les étapes suivantes, consistant à :
- saisir la jante (8) au moyen de l'élément (9) de préhension de jantes,
- saisir le pneumatique (7) au moyen de l'élément (10) de préhension de pneumatiques,
- centrer ledit pneumatique (7) par rapport à ladite jante (8),
- soulever l'assemblage de pneumatique centré, au moyen dudit élément (9) de préhension de jantes et dudit élément (10) de préhension de pneumatiques,
a) déplacer le dispositif de support (11) vers un premier emplacement situé, observé en vue de dessus, à l'extérieur de la cloche (2) de gonflage des pneumatiques,
b) déposer l'assemblage de pneumatique sur le dispositif de support (11), en vue d'instaurer un contact à effet d'étanchement entre la face inférieure dudit assemblage de pneumatique et une surface d'appui (3) dudit dispositif de support,
c) déplacer ledit dispositif de support (11), avec maintien dudit contact, vers un second emplacement situé, observé en vue de dessus, à l'intérieur de ladite cloche de gonflage (2),
d) déplacer une bague (4) de gonflage des pneumatiques, à partir d'un emplacement initial, vers un emplacement de gonflage auquel ladite bague de gonflage (4) sélectionnée est en applique contre une surface latérale du pneumatique (7) et donne naissance à un espace annulaire, entre ledit pneumatique (7) et la jante (8), en vue du gonflage dudit pneumatique (7) par de l'air comprimé, et
e) introduire de l'air comprimé dans ledit espace annulaire entre le pneumatique (7) et la jante (8).

6. Procédé selon la revendication 5, **caractérisé par le fait que** ledit procédé inclut, à l'étape b), les étapes suivantes consistant à :
• déposer la jante (8) au moyen de l'élément (9) de préhension de jantes, et libérer ladite jante (8) par ouverture dudit élément de préhension (9),
• déposer le pneumatique (7) au moyen de l'élément (10) de préhension de pneumatiques, lorsque la jante (8) est intégralement libérée, et libérer ledit pneumatique (7) par ouverture dudit élément de préhension (10).

7. Procédé selon la revendication 5 ou 6, **caractérisé par le fait que**, préalablement à l'étape a), la jante (8) et le pneumatique (7) se trouvent dans un dispositif de serrage de jantes dans lequel il s'opère un montage dudit pneumatique (7) sur ladite jante (8), lequel pneumatique (7) et laquelle jante (8) sont saisis par l'élément (10) de préhension de pneumatiques, et par l'élément (9) de préhension de jantes, à l'issue du montage dans ledit dispositif de serrage de jantes.
